Europäisches Patentamt

**European Patent Office**

Office européen des brevets

(19)

(11) Veröffentlichungsnummer: **0 056 611**
**B1**

(12) # EUROPÄISCHE PATENTSCHRIFT

(45) Veröffentlichungstag der Patentschrift:
04.04.84

(51) Int. Cl.³: **C 12 G 1/02**, B 65 D 88/02,
B 01 F 15/00

(21) Anmeldenummer: **82100185.6**

(22) Anmeldetag: **13.01.82**

(54) **Liegender Behälter, insbesondere zur Behandlung von Weinmaische.**

(30) Priorität: **19.01.81 DE 3101510**
**18.04.81 DE 3115633**

(73) Patentinhaber: **Rieger, Herbert, Talstrasse 33,**
**D-7121 Ingersheim (DE)**

(43) Veröffentlichungstag der Anmeldung:
**28.07.82 Patentblatt 82/30**

(72) Erfinder: **Rieger, Herbert, Talstrasse 33,**
**D-7121 Ingersheim (DE)**

(45) Bekanntmachung des Hinweises auf die Patenterteilung:
**04.04.84 Patentblatt 84/14**

(74) Vertreter: **Patentanwälte Kohler - Schwindling - Späth,**
**Hohentwielstrasse 41, D-7000 Stuttgart 1 (DE)**

(84) Benannte Vertragsstaaten:
**AT CH FR IT LI**

(56) Entgegenhaltungen:
**AT - A - 326 074**
**US - A - 2 796 185**

**Die Akte enthält technische Angaben, die nach dem Eingang der Anmeldung eingereicht wurden und die nicht in dieser Patentschrift enthalten sind.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Liegender Behälter, insbesondere zur Behandlung von Weinmaische

Die Erfindung bezieht sich auf einen liegenden tankartigen Behälter für den Weinbau, die Getränkeindustrie und die Alkoholherstellung, der in seinem oberen Teil eine im wesentlichen kreiszylindrische Form hat. Ein derartiger Behälter ist aus der DE-C-598 029 bekannt.

Große Edelstahl-Behälter, z. B. mit einem Fassungsvermögen zwischen 2500 und 150 000 Litern, werden in Keltern und anderen Betrieben eingesetzt, die sich mit dem Keltern von Wein und dem Ausbau des Weines befassen. Neben dem Problem einer möglichst günstigen Raumausnutzung wird an diese Behälter stets die Forderung gestellt, daß sie sich möglichst vollständig entleeren, also nach dem Entleeren möglichst wenig Trester in dem Tank zurückbleiben, und daß die Behälter möglichst leicht zu reinigen sind, denn vor der neuen Befüllung müssen sie nahezu steril sein. Befinden sich im Tank beim neuen Befüllen noch Tresterreste, so kann dies dazu führen, daß der gesamte neue Tankinhalt zumindest nicht die erforderliche Qualität erreicht, oft sogar vollständig verdirbt. In der Regel weisen die Tanks noch ein Rührwerk auf, wodurch Winkel und Ecken vorhanden sind, die das Absetzen von Tresterresten begünstigen. Weiterhin ist es bekannt, am Boden eines liegenden Behälters eine Austragschnecke vorzusehen, die sich am Boden absetzende Trester austrägt.

Aus der AT-A-326 074 ist ein Maischeentsaftungsbehälter bekannt, der eine liegende Anordnung sowie in seinem oberen Bereich einen rechteckförmigen Querschnitt aufweist. Im unteren Bereich ist eine Seitenwand abgeknickt und erstreckt sich hinüber zur anderen Seitenwand, so daß insgesamt ein trapezförmiger Querschnitt des liegenden Tanks entsteht, in dessen unterer Spitze sich eine Austragschnecke befindet. Bei derartigen rechteckförmigen Grundforen ist jedoch eine Verjüngung des Bodens in eine Ablaufrinne zwingend erforderlich, da sich bei einem rechteckförmigen Tank die Trester gleichmäßig über die gesamte ebene Bodenfläche verteilen würden, wenn eine derartige Ablaufrinne nicht vorgesehen wäre.

Die Lösung des Problems, verbleibende Trester von Hand entfernen zu müssen, bereitet dann besondere Schwierigkeiten, wenn der Tank mit einem Rührwerk versehen ist. Lösungsmöglichkeiten, die eine möglichst vollständige Entleerung erwarten lassen, erfordern einen konstruktiven Aufwand, der wiederum die nachfolgende Reinigung erschwert. Würde man beispielsweise starre Rührflügel so weit verlängern, daß sie die Innenwand des Behälters beinahe berühren, so könnte man an der Innenwand des Behälters sich absetzende Trester zwar von der Wand möglicherweise abkratzen, es würden sich dann jedoch zwischen dem Rührflügelende und der Wand Tresterreste einklemmen, die man auch mit einem scharfen Wasserstrahl nicht entfernen könnte. Im übrigen verformt sich der Tank bei verschiedener Belastung verschieden, so daß es schon aus diesem Grund nicht möglich ist, zwischen dem Flügelende und der Innenwand einen solch kleinen Abstand einzuhalten. Wird jedoch der Abstand zwischen Rührflügelende und Behälterinnenwand hinreichend groß gewählt, so setzt sich in der unteren Hälfte eines üblichen zylinderförmigen Tanks eine dicke Schicht Trester ab, deren Dicke dem Abstand zwischen Flügelspitze und Behälterinnenwand entspricht. Bei dem nachfolgenden Reinigen des Behälters müssen daher große Mengen Trester entfernt werden.

Der Erfindung liegt demgegenüber die Aufgabe zugrunde, einen liegenden kreiszylindrischen Behälter für den Weinbau oder die Getränkeindustrie zu schaffen, also einen Behälter, der in vorteilhafter Weise mit einem Rührwerk versehen werden kann, wobei der Tankinhalt besonders gut abfließen können soll, so daß nur sehr geringe Tresterreste im Tank verbleiben und damit die nachfolgende Reinigung des Tanks nach dem Entleeren erleichtert wird.

Diese Aufgabe wird gemäß der Erfindung dadurch gelöst, daß mindestens ein Abschnitt einer Seitenwand in einem Bereich unterhalb der maximalen Breite des Behälters steiler als eine Kreiszylinderwand verläuft, insbesondere mit einem Winkel von etwa 30° bis 70° gegenüber der Horizontalen.

Ist diese Anordnung hinsichtlich einer senkrechten Symmetrieebene symmetrisch, so ergibt sich ein Querschnitt, der als birnenförmig oder wappenförmig bezeichnet werden kann, wenn man annimmt, daß der Behälter im oberen Bereich im wesentlichen kreiszylindrisch ist und der schmale Teil nach unten zeigt.

Zwar ist aus der US-A-2 796 185 bereits ein Behälter bekannt, der in seinem unteren Teil spitz zuläuft, dabei handelt es sich jedoch um einen Behälter für ein Fahrzeug zum Befördern von Zement, d. h. für eine Anwendung, bei der vollkommen andere physikalische Verhältnisse hinsichtlich des im Tank gespeicherten Mediums vorliegen. Überdies ist der bekannte Behälter für fahrbaren Einsatz ausgebildet, während die erfindungsgemäßen Behälter stets stationär eingesetzt werden. Schließlich hat der bekannte Behälter in seinem oberen Bereich auch keine kreiszylindrische Gestalt, so daß ein Rührwerk, wie es im Weinbau erforderlich ist, bei dem bekannten Behälter nicht eingesetzt werden kann.

Der Vorteil der Erfindung liegt darin, daß durch die relativ steile Neigung der Innenwand im unteren Bereich des Behälters dort sich absetzende Tresterreste nicht oder höchstenfalls in geringerer Menge liegenbleiben als bei den bekannten Behältern. Die erfindungsgemäßen Behälter eignen sich, ggf. unter Verwendung weiterer Ausrüstungen, nicht nur zur Behandlung von Weinmaische, sondern auch zur Alkoholherstellung und in der Getränkeindustrie. Als weitere Ausrüstungen können eine Abtropfeinrichtung oder ein Rührwerk innerhalb des Behälters bei Bedarf vorgesehen werden. Auch hier ergeben sich dann, wenn die Trester aus dem Behälter entleert werden, durch die relativ steilen Wandungen im unteren Bereich die oben geschilderten Vorteile. Bei Füllung des Behälters mit einer Flüssigkeit, die sich absetzende Bestandteile enthält, beispielsweise Hefe, wird dem Absetzen fester Bestandteile an der Behälterwand noch zusätzlich dadurch vorgebeugt, daß durch die steilen Wandungen im unteren Bereich des Behälters in der letzten Phase des Entleerens die Flüssigkeit mit einer gegenüber den bekannten Behältern erhöhten Strömungsgeschwindigkeit an der Wandung des Behälters vorbeifließt. Von dem obengenannten Winkelbereich zwischen 30° und 70°, aus dem im Einzelfall ein geeigneter Neigungswinkel gewählt werden kann, wird für Zwecke des Weinbaues erfindungsgemäß ein Bereich von etwa 45° bis etwa 60° oder auch 55° bevorzugt. Bei Ausführungsformen kann die Wandung des Behälters im unteren Bereich, die durch eine an den im wesentlichen zylindrischen Behälter unten angesetzte Auslaufrinne gebildet wird, auch lotrecht verlaufen, so daß in diesem lotrechten Wandabschnitt praktisch keine Tendenz zum Liegenbleiben von festen Bestandteilen besteht.

Der relativ steil geneigte Abschnitt der Seitenwand kann Teil einer Zylinderfläche sein, oder eine ähnlich gekrümmte Fläche. Zweckmäßig geht der obere zylindrische Teil des Behälters in den steiler geneigten Bereich der Seitenwand ohne Knick über. Dies gilt auch für eine andere Ausführungsform der Erfindung, bei der der relativ steil geneigte Abschnitt der Seitenwand im wesentlichen eben ist. Der Vorteil liegt hierbei darin, daß die Herstellung durch Verwendung ebener Blechtafeln erleichtert ist.

In vielen Fällen wird der Behälter, zumindest was seine Querschnittsform angeht, zu einer lotrechten Längsmittelebene symmetrisch sein.

Bei einer Ausführungsform der Erfindung ist vorgesehen, daß eine der Seitenwände des Behälters im wesentlichen lotrecht verläuft, wogegen die andere Seitenwand in ihrem unteren Bereich dann gegenüber der Horizontalen und Vertikalen schräg verläuft. Der Vorteil dieses Behälters besteht darin, daß zwei Behälter mit ihren lotrechten Seitenwänden Rücken an Rücken dicht benachbart oder sogar unmittelbar aneinander anliegend aufgestellt werden können, so daß sich hierdurch eine besonders günstige Raumausnützung ergibt.

Bei einer Ausführungsform der Erfindung gehen die Seitenwände des Behälters an ihrem unteren Rand in eine die Seitenwände verbindende, im wesentlichen den Teil eines Kreiszylinders bildenden Wandabschnitt über. Der Krümmungsradius dieses zylindrischen Wandabschnitts ist erheblich kleiner als der Krümmungsradius der Behälterwand im oberen Teil des Behälters. Die geschilderte Form ist statisch günstig, da hohe Beanspruchungen der Behälterwand beim Füllen des Behälters vermieden werden. Die auf diese Weise gebildete Auslaufmulde läßt sich auch leicht reinigen. Schließlich kann in dieser Auslaufmulde eine von einem Motor antreibbare Auswurfschnecke angeordnet werden, um beispielsweise die Trester aus dem Behälter herauszufördern.

Die Auslaufmulde kann in ihrem unteren Bereich kreiszylinderisch verlaufen, und dort kann ebenfalls, wie oben bereits beschrieben, eine Auswurfschnecke vorgesehen sein.

Bei einer Ausführungsform der Erfindung weist der Behälter ein Rührwerk auf. Die Achse des Rührwerks kann gemäß einer Ausführungsform der Erfindung in der Symmetrieachse bzw. Symmetrieebene des Behälters angeordnet sein, oder aber gemäß einer anderen Ausführungsform verläuft die Achse des Rührwerks in einem Abstand von dieser Symmetrieachse bzw. Symmetrieebene. Im letztgenannten Fall ist im kreiszylindrischen Teil des Behälters der Abstand der Kreisbahn der Rührflügel des Rührwerks von der Innenwand des Behälters längs des Umfangs des Rührwerks verschieden, er ist in der unteren Hälfte des Behälters kleiner als in dessen oberer Hälfte. Diese zuletzt geschilderte Ausführungsform weist den Vorteil auf, daß das Rührwerk in der unteren Hälfte im Bereich des steileren Abschnittes des Behälters eine den Behälterinhalt im Bereich der Wand des Behälters nach unten fördernde Wirkung haben kann (bei geeigneter Drehrichtung), so daß der Behälterinhalt durch das Rührwerk beim Entleeren des Tanks beispielsweise in den Bereich einer zum Entleeren dienenden Förderschnecke bewegt wird. Weisen die Enden der Rührwerksflügel im Bereich der dichtesten Annäherung an die Behälterwand von dieser einen relativ geringen Abstand auf, so wirken sie gleichzeitig als Abstreifer, durch die ebenfalls einem Hängenbleiben der Trester an der Behälterwand entgegengewirkt wird. Diese Abstreiferwirkung kann bei Ausführungsformen der Erfindung nur im Bereich einer einzigen Zone dichtester Annäherung an die Behälterwand vorhanden sein, z. B. infolge einer seitlichen Versetzung der Rührwerksachse relativ zur senkrechten Symmetrieebene des Querschnittes eines Behälters.

Da an dem steileren Abschnitt der unteren Behälterhälfte die Trester sich beim Entleeren entweder gar nicht absetzen oder aber beim Reinigen leicht abspülen lassen, ist man nicht darauf angewiesen, an der Wand liegengebliebene Trester durch das Rührwerk zu entfernen. Vielmehr kann der Abstand zwischen den Enden der Rührflügel und der Innenwand so groß gewählt werden, daß ein Abstreifen der Innenwand durch die Rührflügel nicht in einem wesentlichen Ausmaß erfolgt. Wenn aber der Abstand zwischen den Flügelenden und der Wand verhältnismäßig groß ist lassen sich sowohl Behälterwand als auch die freien Flügelenden nach dem Entleeren des Behälters mit einem scharfen Wasserstrahl leicht reinigen.

Trotzdem kann auch eine exzentrische Lagerung des Rührwerks dann Vorteile bringen, wenn das Rührwerk bis in den Bereich der erfindungsgemäßen steileren Abschnitte hineinreicht. Denn nicht selten bildet sich über der Austragschnecke eine Brücke von fest aneinanderklebenden Trestern, insbesondere wenn die Schnecke nicht bereits während des Entsaftens des Behälters in Betrieb gesetzt wird. Je weiter die Rührflügel herunterreichen und daher je geringer der Abstand zwischen der Bahn der Rührflügel und der Schnecke ist, desto geringer ist die Neigung, daß sich über der Schnecke eine feste Brücke aus Trester bildet. Je flacher die steilen Abschnitte sind, desto kleiner kann der Abstand der Rührflügelbahn von der Austragschnecke gewählt werden und je weniger dick wird daher die sich gegebenenfalls über der Schnecke bildende Brücke aus Trester. Je steiler jedoch die steilen Abschnitte sind, desto größer ist der kleinstmögliche Abstand zwischen Rührflügelbahn und Austragschnecke und desto dicker wird gegebenenfalls die Brücke aus Trestern; jedoch wird aber die Neigung zur Brückenbildung geringer, weil an der steileren Fläche die Neigung der Trester zunimmt, in den Bereich der Schnecke abzusinken. Bei einer Ausführungsform der Erfindung beträgt die Neigung der steilen Abschnitte zwischen 45° und 52°. Dies hat sich in der Praxis als sehr guter Kompromiß erwiesen.

Bei Behältern, deren Höhe nicht allzu viel größer ist als ihre maximale Breite, kann es ausreichend sein, lediglich ein einziges Rührwerk vorzusehen, wobei dieses Rührwerk ohne Schwierigkeiten nahezu den gesamten Behälterinhalt erfassen kann.

Bei Behältern, die erheblich höher sind als ihrer Breite entspricht, kann es jedoch zweckmäßig sein, gemäß einer Ausführungsform der Erfindung im Behälter mehrere Rührwerke anzuordnen, deren Achsen im wesentlichen parallel sind. Dadurch wird es ermöglicht, auch bei solchen relativ schlanken Behältern einen Großteil oder nahezu den gesamten Inhalt des Behälters mit den Rührwerken zu erfassen.

Beim Vorhandensein mehrerer Rührwerke kann gemäß einer Ausführunfsform der Erfindung der Abstand zweier benachbarter Rührwerksachsen mindestens gleich der Summe der Rührwerksradien der beiden Rührwerke sein. Es besteht dann keine Möglichkeit, daß die Rührwerke miteinander kollidieren können und daher ist es möglich, die beiden Rührwerke je nach den Erfordernissen unterschiedlich schnell anzutreiben oder auch ohne Beachtung besonderer Vorsichtsmaßnahmen eines der Rührwerke stillzusetzen und lediglich das andere anzutreiben, beispielsweise dann, wenn der Behälter nur halb gefüllt ist.

Bei einer anderen Ausführungsform der Erfindung ist dagegen vorgesehen, daß der Abstand zweier benachbarter Rührwerksachsen kleiner ist als die Summe der Rührwerksradien der beiden Rührwerke, und daß die Antriebe der beiden Rührwerke schlupffrei miteinander koppelbar sind.

Weitere Merkmale und Vorteile der Erfindung ergeben sich aus der folgenden Beschreibung von Ausführungsbeispielen der Erfindung anhand der Zeichnung, die erfindungswesentliche Einzelheiten zeigt, und aus den Ansprüchen. Die einzelnen Merkmale können je einzeln für sich oder in beliebiger Kombination bei einer Ausführungsform der Erfindung verwirklicht sein. Es zeigt

Fig. 1 eine Vorderansicht eines ersten Ausführungsbeispiels eines Behälters,

Fig. 2 einen Schnitt des Behälters nach Fig. 1 entsprechend der Linie II-II,

Fig. 3 eine der Fig. 1 entsprechenden Ansicht eines zweiten Ausführungsbeispiels eines Behälters,

Fig. 4 in einer vergleichbaren Ansicht ein weiteres Ausführungsbeispiel eines Behälters,

Fig. 5 ein Ausführungsbeispiel eines unsymmetrischen Behälters,

Fig. 6 eine Seitenansicht eines weiteren Ausführungsbeispieles.

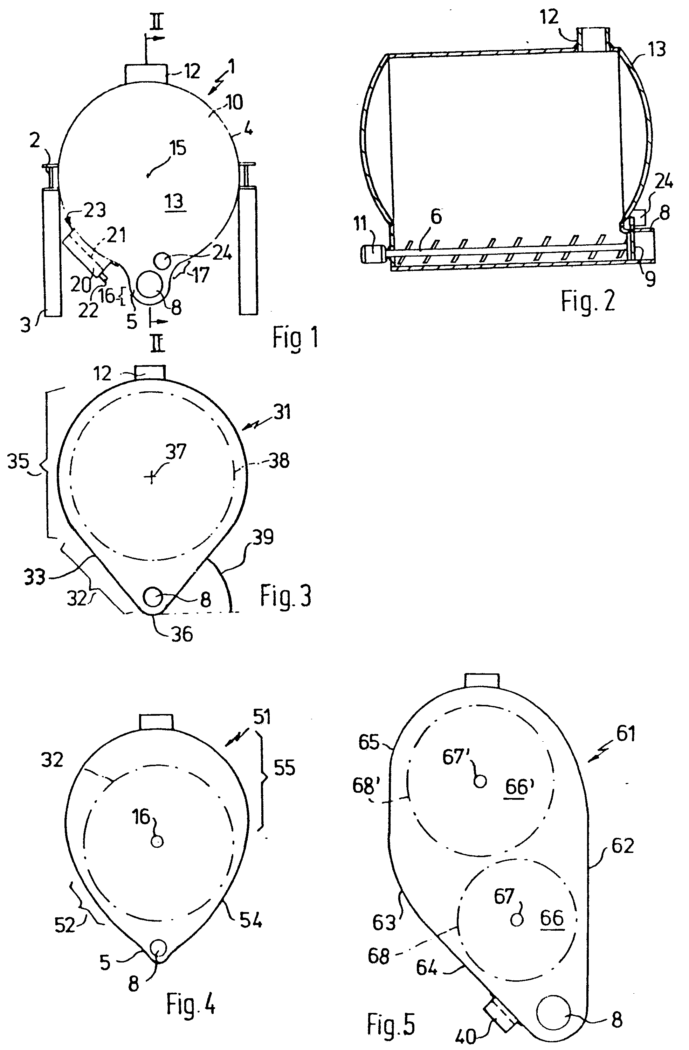

In Fig. 1 und 2 ist ein Behälter 1 von im wesentlichen kreiszylinderischem Querschnitt mit waagrechter Längsachse, also liegend, angeordnet. Die den Behälter 1 auf dem Fußboden abstützende Stützkonstruktion enthält Träger 2 und Stützen 3. Am unteren Bereich des kreiszylinderischen Mantels 4 des Behälters 1 ist eine sich über die gesamte Länge des Behälters erstreckende Ausbuchtung oder Auslaufrinne 5 vorgesehen, in der eine Förderschnecke 6 angeordnet ist, durch die die wenig fließfähigen Teile des Behälterinhalts durch einen in Verlängerung der Förderschnecke 6 liegenden Auslaufstutzen 8 herausgefördert werden können, wenn ein nur angedeutet dargestellter Schieber 9 geöffnet ist. Die Förderschnecke 6 wird an ihrem dem Auslaufstutzen 8 abgewandten Ende, das über die Rückwand 10 des Behälters 1 hinausragt, durch eine Antriebsvorrichtung, im Ausführungsbeispiel durch einen Elektromotor 11 angetrieben. Die Förderschnecke 6 liegt außerhalb des Kreiszylinders, der auf dem größten Teil seines Umfangs durch den Mantel gebildet wird. An der Oberseite des Behälters 1 ist ein Einfüllstutzen 12 vorgesehen. Die Vorderwand 13 des Behälters ist gewölbt. Die Achse der vom Mantel 4 gebildeten Zylinderfläche ist mit 15 bezeichnet. Bei anderen Ausführungsformen kann die Förderschnecke 6 in den genannten Kreiszylinder hineinreichen.

Die Auslaufrinne 5 ist in ihrem unteren Bereich 16 durch eine Halbzylinderfläche begrenzt. Zwischen diesem unteren Bereich 16 und dem zylinderischen Teil des Mantels 4 verläuft die Behälterwand im Bereich 17 entgegengesetzt gekrümmt wie der Mantel 4 und hat hier, wie auch in dem anschließenden Bereich des unteren Teils 16, eine Neigung gegenüber der Horizontalen, die größer ist als in dem sich unmittelbar darüber anschließenden Teil des Mantels 4. Die verschiedenen Teile der Behälterwand einschließlich der Auslaufrinne 5 gehen ohne Knick stetig ineinander über.

Nahezu im untersten Bereich des zylinderischen Mantels 4 ist in der Darstellung der Fig. 1 links von der Auslaufrinne 5 eine sich über einen erheblichen Teil der Länge des Behälters 1 erstreckende Saftkammer 20 im Bereich einer Aussparung des Mantels 4 angeordnet. Die Saftkammer 20 weist in ihrem Inneren im Abstand von der durch den Mantel 4 gebildeten Zylinderfläche ein Schlitzblech 21 auf, das dem Saft den Durchtritt gestattet, aber die Trester zurückhält. Der Saft kann aus der Saftkammer 20 durch einen Abfluß 22 abfließen und durch geeignete Leitungen abgeleitet werden. Der in Fig. 1 und 2 gezeigte Behälter ist durch die Saftkammer zum Abtropfen von z. B. Rotweinmaische geeignet. Ist der Behälter nach Fig. 1 und 2 dagegen nur als Lagertank, beispielsweise für Wein, vorgesehen, so wird die Saftfluß 20 nicht benötigt. Es ist dann ein Ausfluß 24 in der Vorderwand 13 vorgesehen. Dieser Ausfluß 24 befindet sich in an sich bekannter Weise oberhalb des Tiefstpunkts des Behälters, damit die sich absetzenden Bestandteile des Behälterinhalts durch Öffnen des Schiebers 9 getrennt abgeleitet werden können. Wenn keine erheblichen Mengen von sich absetzenden Bestandteilen zu erwarten sind, wird die Förderschnecke 6 nicht benötigt.

In den folgenden Figuren ist im wesentlichen nur die jeweilige Querschnittsform eines liegenden Behälters gezeigt, der in seinem unteren Bereich je nach den Anforderungen eine Förderschnecke aufweisen kann.

Der in Fig. 3 gezeigte spiegelsymmetrische Behälter 3 weist in seinem unteren Bereich 32 eine im wesentlichen ebene Seitenwand 33 auf, wogegen er in seinem oberen Bereich 35 kreiszylinderisch ist. Die Kreiszylinderfläche erstreckt sich über etwas mehr als 180°. Die ebenen Wandabschnitte im Bereich 32 weisen gegenüber der Horizontalen einen Winkel 39 von etwa 50° auf. Die unteren Enden der ebenen Wandabschnitte im Bereich 32 sind durch einen wiederum ein Segment eines Kreiszylinders bildenden Wandabschnitt 36, der sich an die Abschnitte 32 ohne Knick anschließt, miteinander verbunden. Es ist wiederum der Auslaufstutzen 8 angedeutet. Der Auslauf 24 ist zur Vereinfachung der Zeichnung fortgelassen. Bei Bedarf kann im Inneren des Behälters 31 ein z. B. zentrisch angeordnetes Rührwerk mit waagrechter Drehachse 37 angeordnet werden, von dem nur die Kreisbahn 38 strichpunktiert eingezeichnet ist, die die äußersten Enden der Rührflügel beschreibt. Der Behälter 31 kann wie der Behälter 1 in seinem unteren Bereich zusätzlich eine Förderschnecke aufweisen, deren Durchmesser und Abstand vom Rührwerk durch den Winkel, den die beiden Wandflächen 33 bilden, und die Forderung bestimmt ist, daß die Schnecke möglichst nahe am Boden 36 angeordnet sein soll.

Der in Fig. 4 dargestellte Behälter 51 weist einen relativ zu seiner senkrechten Symmetrieebene symmetrischen Querschnitt auf. Seine Seitenwand 54 verläuft etwa im Bereich seiner unteren Hälfte steiler als es einer Fortsetzung des im Bereich der oberen Hälfte 55 etwa halbzylinderischen Querschnittsform entsprechen würde. Die Welle 16 des Rührwerks liegt in der genannten senkrechten Symmetrieebene etwa auf halber Höhe des Behälters 51 unterhalb der Symmetrieachse des zylinderischen Teiles 55. Der Bereich des geringsten Abstands zwischen dem Umfangskreis 32 des Rührwerks 32 des Rührwerks und der Seitenwand 54 liegt in der mit dem Bezugszeichen 52 bezeichneten Zone. Der kleinste Abstand kann zwischen 5 mm und 150 mm groß sein. Die in Fig. 4 nicht sichtbare Förderschnecke liegt im Bereich der Rinne 5 im unteren Bereich des Behälters 51 hinter dem Auslaufstutzen 8, wie auch bei dem oben beschriebenen Behälter 1. Die Seitenwand 54 ist Teil einer Zylinderfläche mit gegenüber dem Bereich 55 vergrößertem Krümmungsradius, ihre Neigung gegenüber der Waagrechten kann z. B. einen mittleren Wert von etwa 50° haben. Die Rinne 5 ist nicht so deutlich ausgeprägt wie beim Tank gemäß Fig. 1. Trester können daher auf dem sehr steilen Abschnitt 54 kaum liegen bleiben.

Die Querschnittsform der Behälter 31 und 51 kann als etwa birnenförmig oder wappenförmig bezeichnet werden.

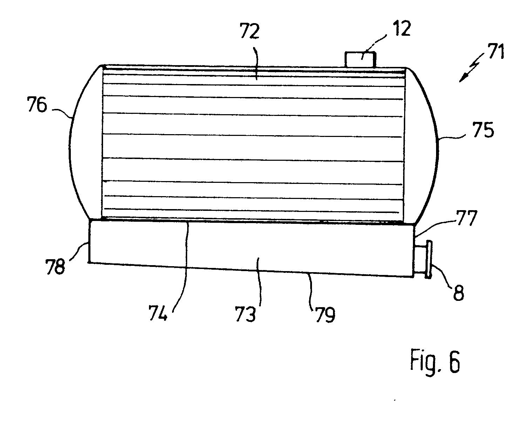

Bei dem in Fig. 5 gezeigten Behälter 61 ist die in der Fig. 6 rechte Seitenwand 62 auf einem erheblichen Teil ihrer Höhenerstreckung senkrecht, die dieser gegenüberliegende Seitenwand 63 (in Fig. 6 links) weist einen unteren Abschnitt 64 auf, der etwa unter einem Winkel von 45° gegenüber der Waagrechten geneigt ist, und dieser Abschnitt geht auf der halben Höhe des Behälters in einen etwa halbzylinderischen Abschnitt 65 über, der schließlich auf die senkrechte Wand 62 trifft. Im unteren Bereich kann hinter dem Ablaufstutzen 8 wieder eine Förderschnecke vorgesehen sein. Im Raum darüber befinden sich zwei Rührwerke 66 und 66', die jeweils eine waagrechte Rührwerksachse 67 bzw. 67' aufweisen. Der Durchmesser des unteren Rührwerks 66 und die Anordnung seiner Welle 67 sind so gewählt, daß sich nur ein geringer Zwischenraum zwischen seinem Umfangskreis 68 und den benachbarten Seitenwänden ergibt. Der Durchmesser und die Lage des oberen Rührwerks 66' sind so gewählt, daß eine Kollision mit dem Rührwerk 66 nicht möglich ist und daß das obere Rührwerk 66' den oberen Raum des Behälters 61 weitgehend ausfüllt. Die Rührwerkswelle 67 und 67' sind durch nicht dargestellte Antriebsvorrichtungen verbunden, die es ermöglichen, die Rührwerke 66 und 66' im gewünschten Drehsinn mit der gewünschten Drehzahl anzutreiben und bei Bedarf auch nur eines der Rührwerke anzutreiben. Die Seitenwände 62 und 64 sind durch einen kreiszylinderischen Wandteil 66 am unteren Ende des Behälters 61 miteinander verbunden. Die Behälter können aus Stahl, insbesondere korrosionsfestem Edelstahl oder einem geeigneten Kunststoff hergestellt sein. Die Vorder- und Rückwand der Behälter wird zweckmäßigerweise aus Stabilitätsgründen etwas vorgewölbt sein, diese Wölbung ist der Einfachheit halber in den Figuren nicht dargestellt.

In Fig. 2 ist die im Schnitt dargestellte Bodenfläche der Auslaufmulde 5 waagrecht dargestellt. Bei Bedarf kann aber die Auslaufmulde oder der im unteren Bereich des Behälters vorgesehene zylinderische Wandabschnitt so ausgebildet werden, daß er in seiner Längsrichtung ein zum Stutzen 8 hin verlaufendes Gefälle aufweist. Dadurch kann beim Entleeren die Störungsgeschwindigkeit der ausströmenden Flüssigkeit vergrößert und somit dem Ansetzen von festen Bestandteilen weiter entgegengewirkt werden.

Fig. 6 zeigt in einer Seitenansicht einen Behälter 71, dessen Seitenwand 72 auf dem größten Teil ihres Umfangs eine Kreiszylinderform hat, die jedoch in ihrem unteren Bereich in ebene Wandabschnitte 73 übergeht, ähnlich wie bei dem Behälter nach Fig. 3, jedoch mit dem Unterschied, daß beim Behälter 71 die Wandabschnitte 73 sich an die kreiszylinderische Seitenwand 72 mit einem nach innen gerichteten Knick 74 anschließt. Die Vorderwand 75 und die Rückwand 76 sind auf dem größten Teil ihrer Fläche nach außen vorgewölbt, um statisch günstige Belastungsverhältnisse zu erzielen. Im unteren Bereich gehen die Stirnwände 75 und 76 jedoch in senkrecht verlaufende Wandabschnitte 77 und 78 über, die gleichzeitig die Stirnwände der durch die Wandabschnitte 73 gebildeten Auslaufrinne bilden. Im vorderen Wandabschnitt 77 ist der Auslaufstutzen 8 angeordnet, die Unterseite 79 der durch die Wandabschnitte 73 gebildeten Auslaufrinne verläuft zum Auslaufstutzen 8 hin leicht geneigt. Bei der in Fig. 6 gezeigten Ausführungsform besteht wegen des steilen Verlaufs im Bereich der Wandabschnitte 77 und 78 nicht die Möglichkeit, daß hier Feststoffe oder Dickstoffe sich absetzen. Die Tendenz zu einem derartigen Absetzen im Bereich der Stirnwände 75 und 76 wäre erheblich größer, wenn sich diese mit der dargestellten Krümmung nach unten fortsetzen würden. Wenn, wie im gezeigten Ausführungsbeispiel, der Bereich mit verhältnismäßig steilen Seitenwänden und Endwänden eine verhältnismäßig große Fläche einnimmt, so bleiben, wenn das Füllgut Weinmaische ist, beim Entleeren die Trester nicht an den Wänden hängen, sondern fallen auch ohne Mithilfe eines Rührwerkes beim Entleeren in die Ablaufrinne und können von dort durch eine in die Fig. 6 nicht eingezeichnete Förderschnecke aus dem Behälter heraustransportiert werden.

Bei denjenigen oben beschriebenen Ausführungsformen, bei denen Seitenwände des Behälters mit unterschiedlicher Krümmung, worunter auch ebene Seitenwände verstanden werden sollen, ohne Knick ineinander übergehen, kann im Bedarfsfall auch ein Knick an der Übergangsstelle vorgesehen sein.

Die Saftkammern 20 sind bei Ausführungsformen der Erfindung vorzugsweise im Bereich der ebenen, steilen Flächen 33 angeordnet.

Die Schrägflächen können so weit in den zylinderischen Teil 72 nach oben ragen, daß sie sich etwa über 20% des Durchmessers des zylinderischen Teils erstrecken. Dies gilt auch für die Stirnwände 77 und 78.

**Patentansprüche**

1. Liegender tankartiger Behälter für den Weinbau, die Getränkeindustrie und die Alkoholherstellung, der in seinem oberen Teil eine im wesentlichen kreiszylindrische Form hat, dadurch gekennzeichnet, daß mindestens ein Abschnitt (17, 32, 54, 64) einer Seitenwand in einem Bereich unterhalb der maximalen Breite des Behälters steiler als eine Kreiszylinderwand verläuft, insbesondere mit einem Winkel von etwa 30° bis 70° gegenüber der Horizontalen.

2. Behälter nach Anspruch 1, dadurch gekennzeichnet, daß der Abschnitt (54) der Seitenwand Teil einer Zylinderfläche mit gegenüber dem oberen Teil (55) des Behälters vergrößertem Krümmungsradius ist.

3. Behälter nach Anspruch 1, dadurch gekennzeichnet, daß der Abschnitt (32, 62, 64) der Seitenwand im wesentlichen eben ist.

4. Behälter nach einem der vorhergehenden Ansprüche, dadurch gekennzeichnet, daß der Behälter 1, 31, 41, 51) bezüglich einer lotrechten Längsmittelebene im wesentlichen symmetrisch ist.

5. Behälter nach Anspruch 3, dadurch gekennzeichnet, daß eine der Seitenwände (62) des Behälters (61) im wesentlichen lotrecht verläuft.

6. Behälter nach einem der vorhergehenden Ansprüche, dadurch gekennzeichnet, daß die Seitenwände des Behälters (31, 61) an ihrem unteren Rand in einen die Seitenwände verbindenden, im wesentlichen den Teil eines Kreiszylinders bildenden Wandabschnitt (36, 66) übergehen.

7. Behälter nach einem der Ansprüche 1 bis 5, dadurch gekennzeichnet, daß der Behälter in seinem unteren Bereich eine nach unten ragende Ablaufrinne (5) aufweist.

8. Behälter nach einem der Ansprüche 1 oder 2, dadurch gekennzeichnet, daß der auch in seinem unteren Bereich größtenteils im wesentlichen kreiszylinderische Behälter (41) eine außerhalb der Kreiszylinderfläche liegende Ablaufrinne (5) aufweist.

9. Behälter nach Anspruch 8, dadurch gekennzeichnet, daß die Seitenwände der Ablaufrinne (5) auf einem Teil ihrer Höhe etwa lotrecht verlaufen.

10. Behälter nach Anspruch 8 oder 9, dadurch gekennzeichnet, daß die Ablaufrinne (5) im unteren Bereich (36) kreiszylindrisch verläuft.

11. Behälter nach einem der vorhergehenden Ansprüche, dadurch gekennzeichnet, daß im unteren Bereich des Behälters eine Austragschnecke (6) angeordnet ist.

12. Behälter nach einem der vorhergehenden Ansprüche, mit mindestens einer nach außen gewölbten Stirnwand, dadurch gekennzeichnet, daß mindestens ein Abschnitt (77, 78) der Endwand (75, 76) im unteren Bereich der Stirnwand steiler verläuft, als es der Verlängerung der Stirnwand nach unten mit ihrer Wölbung im oberen Bereich entspricht.

13. Behälter nach einem der vorhergehenden Ansprüche, dadurch gekennzeichnet, daß er ein Rührwerk enthält.

14. Behälter nach Anspruch 13, dadurch gekennzeichnet, daß die Achse des Rührwerks in der Symmetrieachse oder Symmetrieebene des Behälters angeordnet ist.

15. Behälter nach Anspruch 13, dadurch gekennzeichnet, daß die Achse des Rührwerks in einem Abstand von der Symmetrieachse oder Symmetrieebene des Behälters verläuft.

16. Behälter nach Anspruch 15, dadurch gekennzeichnet, daß die Drehachse (Welle 16) des Rührwerks (15) unterhalb der Symmetrieachse (20) des kreiszylinderischen Teils des Behälters verläuft.

17. Behälter nach einem der vorhergehenden Ansprüche, dadurch gekennzeichnet, daß im Behälter (61, 71) mehrere Rührwerke (66, 66', 77, 78) angeordnet sind, deren Achsen im wesentlichen parallel sind.

18. Behälter nach Anspruch 17, dadurch gekennzeichnet, daß der Abstand zweier benachbarter Rührwerksachsen mindestens gleich der Summe der Rührwerksradien der beiden Rührwerke ist.

19. Behälter nach Anspruch 17, dadurch gekennzeichnet, daß der Abstand zweier benachbarter Rührwerksachsen kleiner ist als die Summe der Rührwerksradien der beiden Rührwerke, und daß die Antriebe (83, 84) der beiden Rührwerke (77, 78) schlupffrei miteinander koppelbar sind.

20. Behälter nach Anspruch 1, dadurch gekennzeichnet, daß der Winkel (39) mit der Waagrechten zwischen 45° und 55° liegt.

21. Behälter nach einem der vorhergehenden Ansprüche, dadurch gekennzeichnet, daß Saftkammern im Bereich der steilen Abschnitte (32, 54, 64, 73) angeordnet sind.


**Claims**

1. A horizontally disposed tank-like container, for use in winemaking, the beverage industry and the preparation of alcohol, its upper portion being of a substantially circular cylindrical form, characterized in that at least one section of a side wall in a region below the maximum girth of the container is steeper than the cylindrical wall and in particular extends at an angle of approximately 30° to 70° to the horizontal.

2. A container according to claim 1, characterized in that said side wall section is part of a cylindrical surface area having a radius of curvature which is greater than the radius of curvature of the upper portion of the container.

3. Container according to claim 1, characterized in that said side wall section is substantially plane.

4. Container according to one of the proceeding claims, characterized in that the container is substantially symmetric about a perpendicularly oriented longitudinal median plane.

5. Container according to claim 3, characterized in that one of the side walls of the container is substantially perpendicular.

6. Container according to one of the proceeding claims characterized in that the side walls of the container at their lower edge merge with a wall section substantially in the form of a segment of a circular cylinder serving to connect the two side walls.

7. Container according to claim 1 to 5, characterized in that the container is provided in its bottom region with a discharge drain extending downwardly.

8. Container according to claim 1 or 2, characterized in that the container, being substantially circular-cylindrical also in its lower region, is provided with a discharge drain located outside the circular cylindrical surface area.

9. Container according to claim 8, characterized in that the side walls of the discharge drain extend approximately vertical for part of their elevation.

10. Container according to claim 8 or 9, characterized in that the discharge drain in its bottom region is circular cylindrical in shape.

11. Container according to one of the proceeding claims, characterized in that the lower region of the container is provided with a conveyor screw.

12. Container according to one of the proceeding claims, having at least one outwardly curved front wall, characterized in that at least one section of the front wall in its lower region is steeper than a downward extension of the front wall would be in accordance with the radius of curvature of the upper region.

13. Container according to one of the proceeding claims, characterized in that the container is provided with an agitator.

14. Container according to claim 13, characterized in that the axis of the agitator is coaxial with the axis of symmetry or lies in the symmetry plane of the container.

15. Container according to claim 13, characterized in that the axis of the agitator is positioned at a distance from the symmetry axis or symmetry plane of the container.

16. Container according to claim 15, characterized in that the axis of rotation (shaft) of the agitator extends below the axis of symmetry of the circular cylindrical portion of the container.

17. Container according to one of the proceeding claims, characterized in that more than one agitators are disposed in the container, the axes of which being oriented substantially parallel.

18. Container according to claim 17, characterized in that the distance between two adjacent agitator axes is at least equal to the sum of the radii of the two agitators.

19. Container according to claim 17, characterized in that the distance between adjacent agitator axes is less than the sum of the radii of two agitators, and in that the drive means for two agitators are adapted to be coupled to each other without slippage.

20. Container according to claim 1, characterized in that the angle formed with the horizontal is from 45° to 55°.

21. Container according to one of the proceeding claims, characterized in that juice receptacles are provided in the region of the steep wall sections.

**Revendications**

1. Cuve du type réservoir, couchée, pour l'industrie viticole, l'industrie des boissons et la fabrication de l'alcool, qui présente dans sa partie supérieure une forme sensiblement cylindrique à base circulaire, caractérisée en ce qu'au moins un segment (17, 32, 54, 64) d'une paroi latérale s'étend, dans une région située au-dessous de la largeur maximum de la cuve, avec une pente plus raide que celle d'une paroi de cylindre à base circulaire, en particulier, avec un angle d'environ 30° à 70° sur l'horizontale.

2. Cuve selon la revendication 1, caractérisée en ce que le segment (54) de la paroi latérale fait partie d'une surface cylindrique possédant un rayon de courbure plus grand que celui de la partie supérieure (55) de la cuve.

3. Cuve selon la revendication 1, caractérisée en ce que le segment (32, 62, 64) de la paroi latérale est sensiblement plan.

4. Cuve selon l'une des revendications précédentes, caractérisée en ce que la cuve (1, 31, 41, 51) est sensiblement symétrique par rapport à un plan longitudinal médian vertical.

5. Cuve selon la revendication 3, caractérisée en ce que l'une des parois latérales (62) de la cuve (61) s'étend sensiblement verticalement.

6. Cuve selon l'une des revendications précédentes, caractérisée en ce que les parois latérales de la cuve (31, 61) se raccordent, au niveau de leur bord inférieur, à un segment de paroi (36, 66) qui relie les parois latérales et forme sensiblement une partie d'un cylindre à base circulaire.

7. Cuve selon l'une des revendications 1 à 5, caractérisée en ce que, dans sa région inférieure, la cuve présente une rigole d'écoulement (5) qui fait saillie vers le bas.

8. Cuve selon l'une des revendications 1 et 2, caractérisée en ce que la cuve (41) qui est sensiblement cylindrique à base circulaire sur la plus grande partie, même dans sa région inférieure, présente une rigole d'écoulement (5) qui se trouve en dehors de la surface du cylindre à base circulaire.

9. Cuve selon la revendication 8, caractérisée en ce que les parois latérales de la rigole d'écoulement (5) s'étendent à peu près perpendiculairement sur une partie de leur hauteur.

10. Cuve selon la revendication 8 ou 9, caractérisée en ce que la rigole d'écoulement (5) s'étend avec une forme cylindrique à base circulaire dans la région inférieure (36).

11. Cuve selon l'une des revendications précédentes, caractérisée en ce que, dans la région inférieure de la cuve, est agencée une vis d'extraction (6).

12. Cuve selon l'une des revendications précédentes, comprenant au moins une paroi frontale bombée vers l'extérieur, caractérisée en ce qu'au moins un segment (77, 78) de la paroi terminale (75, 76) présente une plus forte pente de la région inférieure de la paroi frontale que celle qui correspond au prolongement de la paroi frontale vers le bas en conservant la même courbure que dans sa région supérieure.

13. Cuve selon l'une des revendications précédentes, caractérisée en ce qu'elle renferme un agitateur.

14. Cuve selon la revendication 13, caractérisée en ce que l'axe de l'agitateur est disposé dans l'axe de symétrie ou dans le plan de symétrie de la cuve.

15. Cuve selon la revendication 13, caractérisée en ce que l'axe de l'agitateur s'étend à une certaine distance de l'axe de symétrie ou du plan de symétrie de la cuve.

16. Cuve selon la revendication 15, caractérisée en ce que l'axe de rotation (arbre 16) de l'agitateur (15) s'étend au-dessous de l'axe de symétrie (20) de la partie cylindrique à base circulaire de la cuve.

17. Cuve selon l'une des revendications précédentes, caractérisée en ce que, dans la cuve (61, 71) sont agencés plusieurs agitateurs (66, 66', 77, 78) dont les axes sont sensiblement parallèles.

18. Cuve selon la revendication 17, caractérisée en ce que la distance entre deux axes d'agitateurs voisins est au moins égale à la somme des rayons des deux agitateurs.

19. Cuve selon la revendication 17, caractérisée en ce que la distance entre deux axes d'agitateurs voisins est plus petite que la somme des rayons des deux agitateurs et en ce que les entraînements (83, 84) des deux agitateurs (77, 78) peuvent être accouplés l'un à l'autre sans glissement.

20. Cuve selon la revendication 1, caractérisée en ce que l'angle (39) formé avec l'horizontale est compris entre 45° et 55°.

15 **0 056 611**

21. Cuve selon l'une des revendications précédentes, caractérisée en ce que des chambres de soutirage sont agencées dans la région des segments à pente raide (32, 54, 64, 73).

9

0 056 611

Fig 1

Fig. 2

Fig. 3

Fig. 4

Fig. 5

11

Fig. 6